# EUROPÄISCHE PATENTANMELDUNG

(11) **EP 0 930 552 A2**
(43) Veröffentlichungstag der Anmeldung: **21.07.1999**
(21) Anmeldenummer: 99100861.6
(22) Anmeldetag: 19.01.1999
(51) Int. Cl.: G05B 19/408

(54) **Elektrisches Antriebssystem mit verteilter, virtueller Leitachse**

(30) Priorität: 20.01.1998 DE 19801754
(71) Anmelder: BAUMÜLLER ANLAGEN-SYSTEMTECHNIK GmbH Co., 90482 Nürnberg (DE)
(72) Erfinder: Rainer, Ludwig, Dipl.-Ing., D-90409 Nürnberg (DE)
(74) Vertreter: Götz, Georg, Dipl.-Ing.

(57) **Zusammenfassung**

Elektrisches Antriebssystem zur Verstellung von mehreren, insbesondere einer Vielzahl von Achsen oder sonstigen bewegbaren Funktionsteilen eines Gerätes oder einer Maschine, insbesondere von Zylindern oder Walzen von Druckmaschinen, in ihrer Lage, Geschwindigkeit oder Beschleunigung, mit mehreren elektromotorischen Antriebseinheiten, die jeweils mit wenigstens einem der Funktionsteile verbunden sind, mit mehreren Signalverarbeitungsrechnern, die zur Aufnahme von Leit-, Steuer-, Soll- und/oder Lage-, Geschwindigkeits- und/oder Beschleunigungungssignalen von etwaigen Leitrechnern oder Lagegebern an den Funktionsteilen oder Läufern der Antriebseinheiten ausgebildet und mit den Antriebseinheiten zu deren steuerungs- oder regelungstechnischen Kontrolle verbunden sind, und mit mehreren, in sich geschlossenen Signalverarbeitungsnetzwerken, die jeweils mehrere der Signalverarbeitungsrechner als Knoten aufweisen und innerhalb des Geräts oder der Maschine einer Sektion beziehungsweise einem Verband von Funktionsteilen zugeordnet sind, wobei innerhalb eines Netzwerks deren Knoten nach dem Master/Slave-Prinzip angeordnet und durch Kommunikationskanäle und/oder ein Kommunikationssystem miteinander verbunden sind, und wenigstens ein Knoten eines Signalverarbeitungsnetzwerks mit einem Knoten eines anderen Signalverarbeitungsnetzwerks gekoppelt ist, wobei die Signalverarbeitungsnetzwerke zur bidirektionalen Kommunikation und/oder Information untereinander jeweils über ihre Masterknoten oder Master Signalverarbeitungsrechner miteinander gekoppelt sind.

## Beschreibung

Die Erfindung betrifft ein elektrisches Antriebssystem zu Verstellung von mehreren, insbesondere einer Vielzahl von Achsen oder sonstigen bewegbaren Funktionsteilen in einem Gerät oder einer Maschine, insbesondere von Zylindern oder Walzen in einer Druckmaschine. Dazu sind mehrere elektromotorische Antriebseinheiten vorgesehen, die jeweils mit wenigstens einem der Funktionsteile zur Verstellung von deren Lage, Geschwindigkeit oder Beschleunigung verbunden sind. Ferner sind mehrere Signalverarbeitungsrechner vorgesehen, die zur Aufnahme von Leit-, Steuer-, Soll- und/oder Lage-, Geschwindigkeits- und/oder Beschleunigungssignalen von etwaigen Leitrechnern und/oder Lagegebern an den Funktionsteilen oder Läufern der Antriebseinheiten ausgebildet und mit den Antriebseinheiten zu deren steuerungs- oder regelungstechnischen Kontrolle verbunden sind. Weiter sind bei dem gattungsgemäßen elektrischen Antriebssystem mehrere, in sich geschlossene Signalverarbeitungsnetzwerke gebildet, die jeweils mehrere der Signalverarbeitungsrechner als Knoten aufweisen und innerhalb des Geräts oder der Maschine einer Sektion bzw. einem Verband von Funktionsteilen zugeordnet sind, wobei innerhalb eines Netzwerks die Knoten nach den Master/Slave-Prinzip aufeinander abgestimmt und durch Kommunikationskanäle und/oder ein Kommunikationssystem miteinander verbunden sind, und wenigstens ein Knoten eines Signalverarbeitungsnetzwerks mit einem Knoten eines anderen Signalverarbeitungsnetzwerks gekoppelt ist. Ferner betrifft die Erfindung ein Arbeits- oder Betriebsvenfahren für ein derartiges Antriebssystem.

Bei komplexen und umfangreichen Maschinen wie z.B. Druckmaschinen mit einer Vielzahl anzutreibender Teile, beispielsweise Achsen von Druckwalzen, ist es allgemein bekannt, elektrische Einzelantriebstechnik zu verwenden: Möglichst jeder einzelnen Antriebsachse wird ein Elektromotor zugeordnet, der über sein Leistungselektronikteil von einer digitalen Signalverarbeitungseinheit kontrolliert ist. In dieser kann eine Software zur Mehrachsregelung und entkoppelten Motorführung implementiert sein. Wegen weiterer Einzelheiten wird auf die DE 43 22 744 A1, DE 195 27 199 A1, DE 195 29 430 A1 und den Katalog der Firma Baumüller Nürnberg GmbH 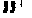 regelbare Antriebssysteme, Steuerungen, Dienstleistungen 1995" verwiesen. Bei solchen Systemen ist es zweckmäßig, die Vielzahl von anzutreibenden Teilen oder Achsen in inhaltlich zusammenhängende Gruppen, Verbände oder Sektionen zu untergliedern, und diesen für die Antriebsregelung jeweils ein Netzwerk mit einer Mehrzahl von digitalen Signalverarbeitungseinheiten zuzuordnen. Aufgrund der daraus resultierenden Dezentralisierung der Sollwertgenerierungs- und sonstigen Regelungs- und Steuerungsaufgaben auf eine Mehrzahl von Multi-Signalprozessornetzen, die nach dem Master/Slave-Prinzip organisiert sind, lassen sich vielfach vereinfachte Software-Strukturen, ein erhöhter Informations- und Datendurchsatz bzw. eine Leistungssteigerung sowie eine höhere Gesamtverfügbarkeit erzielen.

Ein weiterer Vorteil von Multi-Signalprozessornetzen im Hinblick auf miteinander (winkel-) synchron zu betreibender Funktionsteile in komplexen Geräten und Maschinen besteht darin, daß innerhalb eines solchen Netzes die notwendige Synchronisation für die Slaveprozessoren bzw. Antriebsregler ohne weiteres durch den im Netz vor allem bei der Kommunikation dominierenden Master-Prozessor herbeigeführt werden kann. Dies gilt insbesondere, wenn die Prozessorknoten mittels geeigneter Kommunkationsschnittstellen ringförmig miteinander verbunden sind. Zur Offenbarung hierzu wird auf die Fundstelle 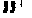 SERCOS interface - Digitale Schnittstelle zur Kommunikation zwischen Steuerungen und Antrieben in numerisch gesteuerten Maschinen" DE 1000/07.92 von der Fördergemeinschaft SERCOS interface e.V., Pelzstraße 5, D 5305 Alfter/Bonn sowie 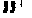 Einchip-Controller für das SERCOS interface 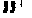 von E. Kiel, O. Schiernberg in Elektronik 1992, Seite 90 ff. verwiesen. Danach kann die notwendige Synchronisation für die Slave-Prozessoren bzw. Antriebsregler ohne weiteres durch den Master-Prozessor bzw. -Knoten herbeigeführt werden, der dazu sein Master-Synchrontelegramm zur ringartigen Weitergabe an die einzelnen Achs-Signalverarbeitungseinheiten ausgibt. Damit läßt sich der Synchronlauf der zu einer Gruppe bzw. Sektion zusammengefaßten und dem Multiprozessornetzwerk zugeordneten Achsen untereinander realisieren.

Ferner ist auf die Veröffentlichung von Weidauer 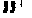 Servoantriebe - Vom einfachen Steller zum intelligenten Systembaustein" in AGT 4/64, Seite 14 - 17 zu verweisen. In der dortigen Abbildung 7 können zwischen den Antriebsreglern einzelner Servoantriebe spezielle Kommunikationsverbindungen, wie zum Beispiel Peer-to-Peer bestehen, die einen schnellen Transfer von Soll- und Istwerten zwischen den einzelnen Servoantrieben ermöglichen sollen, ohne daß dafür ein überlagertes Automatisierungssystem erforderlich wäre. Allerdings ist darin die Verbindung und der Datenaustausch lediglich zwischen einzelnen Antrieben aufgezeigt, die Knoten eines die Antriebe umfassenden Netzwerks bilden.

Der Erfindung liegt die Aufgabe zugrunde, mit einem elektrischen Antriebssystem mit mehreren Singalverarbeitungsnetzwerken, die jeweils einer Gruppe bzw. Sektion von anzutreibenden Maschinenachsen oder sonstigen Maschinenfunktionsteilen zugeordnet sind, eine Abstimmung oder Einstellung in der Lage, Geschwindigkeit oder in der Beschleunigung von Maschinenachsen oder sonstigen Maschinenfunktionsteilen relativ zueinander auch dann zu ermöglichen, wenn diese steuerungs- oder regelungstechnisch unterschiedlichen Gruppen bzw. Sektionen zugewiesen und damit von unterschiedlichen Signalverarbeitungsnetzwerken kontrolliert sind. Insbesondere soll eine erhöhte Produktions- oder Betriebsflexibilität der betreffenden Maschine ermöglicht sein, indem für die einzelnen Funktionskomponenten eine Vielzahl virtueller Kupplungsmöglichkeiten geschaffen wird. Jeder Antrieb eines Funktionsteiles soll als Referenz für die 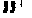 virtuelle Leitachse" zur Synchronisation eines beliebigen anderen Verbunds aus Antriebseinheit und Funktionsteil verwendbar sein, selbst wenn letztere einem anderen Signalverarbeitungsnetzwerk als dem mit dem Leitantrieb zugeordnet sind.

Zur Lösung dieses Aufgabenkomplexes wird bei einem elektrischen Antriebssystem mit den eingangs genannten Merkmalen erfindungsgemäß vorgeschlagen, daß die Signalverarbeitungsnetzwerke zur bidirektionalen Kommunikation und Information untereinander jeweils über ihre Masterknoten bzw. Master-Signalverarbeitungsrechner miteinander gekoppelt sind. Ferner wird im Rahmen des erfindungsgemäßen Arbeits- oder Betriebsverfahrens für das genannte Antriebssystem vorgeschlagen, daß in einem, mehreren oder allen Signalverarbeitungsnetzwerken jeweils eine virtuelle Leitachse zur kinematischen Synchronisation der dem Signalverarbeitungsnetzwerk zugeordneten Mehrzahl von Funktionsteilen generiert wird.

Mit dieser, sowohl den strukturellen Grundaufbau als auch die Funktionssoftware umfassenden, allgemeinen erfinderischen Idee ist die Ausgangsbasis für deren Weiterbildung dahingehend geschaffen, daß eine, mehrere oder alle der Antriebseinheiten eines oder mehrerer Signalverarbeitungsnetzwerke über die Kopplung der Masterknoten bzw. -Signalverarbeitungsrechner untereinander nach einer virtuellen Leitachse eines anderen Signalverarbeitungsrechners betrieben werden können. Jedes einer Sektion von Funktionsteilen zugewiesene Signalverarbeitungsnetzwerk kann also eine virtuelle Leitachse enthalten, zu der grundsätzlich alle, im gesamten Antriebssystem vorhandenen Antriebe bewegungs-, insbesondere winkelsynchron betrieben werden können. Im konkreten Beispiel einer Druckmaschine sind aufgrund des erfindungsgemäßen Konzeptes die vielfältigen Systemkomponenten beliebig umsteuerbar, wodurch sich außerordentlich viele Bahnführungs- und Farbbelegungsmöglichkeiten ergeben und Druckwerke bzw. - einheiten beliebig einsetzbar sind. Vor allem können sie beliebig verschiedenen Falzwerken zugeordnet werden. Eine mit dem erfindungsgemäßen Antriebssystem und deren Betriebsweise versehene Druckmaschine ist in der Lage, mehrere Tausend unterschiedliche Produktvarianten zu fahren, wobei jede Variante andere Sollpositionen für die zugewiesenen Druckeinheiten bzw. Funktionsteile einhalten kann.

Nach einer besonders vorteilhaften Realisierung des erfindungsgemäßen Antriebsgrundkonzeptes sind die Masterknoten mehrerer oder aller Signalverarbeitungsnetze zueinander so angeordnet, daß sie ein eigenes, in sich geschlossenes Leitnetzwerk bilden. Mit dieser Ausbildung kann der allgemeine Erfindungsgedanke der möglichst beliebigen Verteilung einer oder mehrerer virtueller Leitachsen über die Signalverarbeitungsnetzwerke des Antriebssystems einer konkreten Realisierung zugeführt werden, weil mit dem Leitnetzwerk ein Kommunikationsmedium zur wechselseitigen bidirektionalen Information der Netzwerke untereinander insbesondere über Synchronisationsparameter geschaffen ist. Synchronisationsinformation, die von einer virtuellen Leitachse eines lokalen Netzwerks abgeleitet ist, kann so zu jeder Antriebseinheit eines beliebigen anderen, lokalen Netzwerks transportiert bzw. übertragen werden.

Mit der vorliegend beschriebenen Erfindung wird über die konkreten Ausführungsbeispiele der älteren, nachveröffentlichten DE-Patentanmeldung 196 33 745.3 hinausgegangen, nach der eine Synchronisation unterschiedlicher Netzwerke über die unidirektionale Weitergabe von Synchronisationsinformation von einem Master-Netzwerk zu mehreren Slave-Netzwerken erfolgt, die in einer Reihe hintereinander an das Master-Netzwerk angekoppelt sind. Gleichwohl wird zur ergänzenden Offenbarung auf diese ältere Patentanmeldung verwiesen.

Um vor allem die eine oder die mehreren virtuellen Achsen des erfindungsgemäßen Antriebssystems insbesondere von einem Leitstand für die komplexe Maschine oder Anlage aus zentral steuern zu können, ist nach einer Erfindungsausbildung vorgesehen, daß mindestens eines der Signalverarbeitungsnetzwerke, vorzugsweise mehrere oder alle, eine Leitschnittstelle zu einem übergeordneten Leitsteuerungssystem, insbesondere zu einem Leitstandsrechner, aufweist. Damit ist die weitere Möglichkeit eines direkten Zugriffs des Leitsteuerungssystems, insbesondere des Leitstandsrechners, auf den Masterknoten und/oder einem oder mehreren der Slaveknoten zu deren direkter Ansteuerung eröffnet. Die so implementierbare Kommunikation zwischen einem Sektions-Signalverarbeitungsnetzwerk und dem übergeordneten Leitsteuerungssystem kann dazu ausgenützt werden, daß letzteres die virtuelle Leitachse und damit ein oder mehrere Slave-Signalverarbeitungsrechner (Antriebsregler) ansteuert.

Es liegt im Rahmen der Erfindung, daß die Masterknoten eine oder mehrere Schnittstellen aufweisen, die der Kopplung sowohl der Masterknoten untereinander im Leitnetzwerk als auch der Kopplung mit den Slaveknoten im jeweiligen lokalen Signalverarbeitungsnetzwerk dienen und mit Mitteln zur zeitlichen Koordination bzw. Synchronisierung der gekoppelten Knoten versehen sind. Zweckmäßig sind wenigstens die Masterknoten der jeweiligen Master/Slave-Signalverarbeitungsnetzwerke jeweils mit einer Übertragungs- oder Sendeeinrichtung für Synchronisationssignale- oder zeichen, insbesondere -telegramme versehen, um Synchronisationsinformation von der virtuellen Leitachse eines lokalen Netzwerks gegebenenfalls über das Leitnetzwerk als Zweckmäßiges Kommunikationsmedium zu einem oder mehreren Slave-Knoten bzw. Antriebsreglern ein oder mehrerer anderer Signalverarbeitungsnetzwerke übermitteln zu können. Komplementär dazu ist jeder Master- und/oder Slaveknoten mit Mitteln zur Ableitung oder Rückgewinnung eines Synchrontaktes aus erhaltener Synchronisationsinformation versehen.

Eine besondere Ausbildung des erfindungsgemäßen Arbeits- oder Betriebsverfahrens für das Antriebssystem besteht darin, daß die zu einer virtuellen Leitachse eines lokalen Netzwerks gekoppelten Antriebseinheiten in eine Mehrzahl von Gruppen unterteilt werden. Für diese Gruppen werden in den zugeordneten Master- und/oder Slaveknoten (Signalverarbeitungsrechner oder Antriebsregel) spezielle Funktionen wie Farb- und Schnittregister, überlagerte Verfahrsätze von Farb- und Schnittregistern, Referenzieren als besondere Antriebsfunktion während des Einziehens und des Hochlaufens, additive Geschwindigkeitssollwerte usw. angelegt. Ergänzend wird auf die heutigen, europäischen Patentanmeldungen 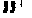 Referenzierverfahren für eine Maschine oder Anlage" (Anwaltsakte B005/019 E EP) und 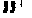 Betriebsverfahren für eine Druckmaschine mit einer Mehrzahl von Funktionen sowie steuerungstechnische Anordnung" (Anwaltsakte B005/020 E EP) derselben Anmelderin verwiesen.

Weitere Einzelheiten, Merkmale, Vorteile und Wirkungen auf der Basis der Erfindung ergeben sich aus der nachfolgenden Beschreibung bevorzugter Ausführungsbeispiele der Erfindung sowie aus den Zeichnungen. Diese zeigen in jeweils Blockschaltbilddarstellung in:
- Fig. 1: ein erfindungsgemäßes Antriebssystem in seiner Grundstruktur,
- Fig. 2: ein erfindungsgemäßes Antriebssystem mit einem ringartig strukturierten Leitnetzwerk.

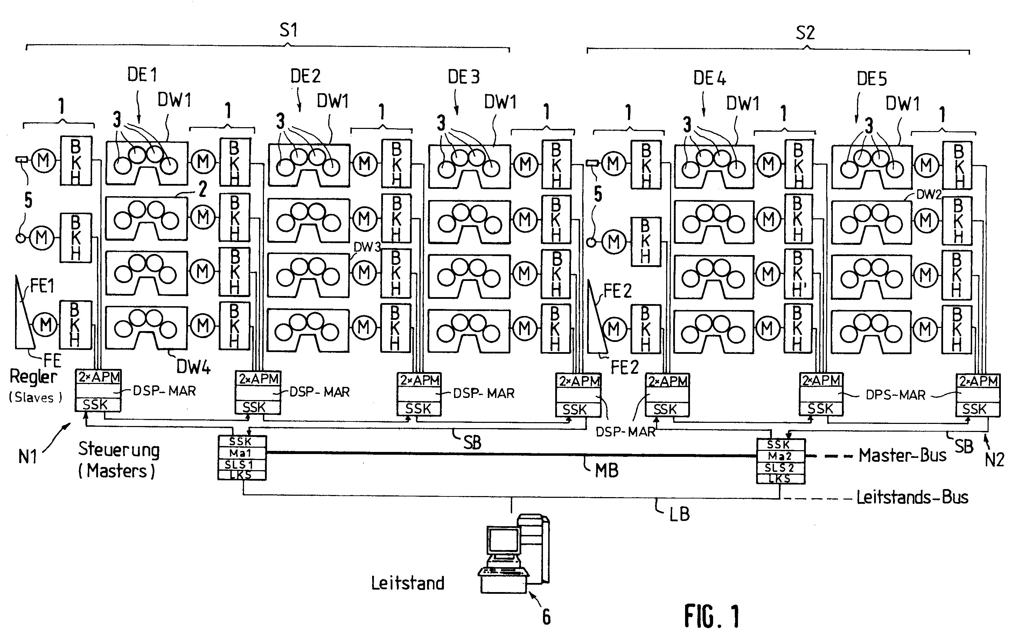

In Figur 1 ist die Konfiguration eines elektrischen Multi-Antriebssystems für eine praktisch 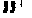 wellenlose" Zeitungsdruckmaschine gezeigt. Eine Vielzahl von Antriebseinheiten 1, in der Regel bestehend aus einem Elektromotor M und einem Umrichter BKH, dient zur Bewegung bzw. Drehung von Funktionsteilen wie Druckwerken DW1...4 jeweils mit Druckzylindern 3, Falzeinheiten FE1, FE2 oder sonstigen Funktionsteilen 5. Im gezeichneten Beispiel sind jeweils vier Druckwerke 1...4 zu einer Druckeinheit DE1, DE2, DE3, DE4, DE5,... zusammengefaßt. Die ersten drei Druckeinheiten DE1, DE2, DE3 bilden zusammen mit der ersten Falzeinheit FE1 und sonstigen Funktionsteilen 5 eine erste Sektion 1, die weiteren beiden Druckeinheiten DE4, DE5 eine zweite Sektion 2, und weitere Funktionsteile können weitere Sektionen in grundsätzlich beliebiger Anzahl bilden. Zur Steuerung und Regelung der Antriebseinheiten 1 jeder Sektion S1, S2,... sind ein jeweilige Signalverarbeitungsnetzwerke N1, N2,... angeordnet, die aus Master-Signalverarbeitungsrechnern bzw. Masterknoten Ma1, Ma2,... und mehreren mit diesen vernetzten Slave-Signalverarbeitungsrechnern bzw. Slaveknoten DSP-MAR bestehen. Letztere sind als Mehrachsregler ausgebildet und können gemäß gezeichnetem Beispiel über jeweils zwei angeschlossene Achsperipheriemodul-Paare APM (vgl. DE 43 22 744 A1; sowie eingangs genannter Baumüller-Katalog) bis zu vier Motorachsen gleichzeitig regeln oder sonstwie kontrollieren. Die Kommunikation innerhalb eines lokalen Signalverarbeitungsnetzwerks N1, N2,... erfolgt über seriell-synchrone Kommunikationsschnittstellen (vgl. zum Beispiel eingangs genannte SERCOS interface-Fundstellen) im Rahmen eines seriellen, ringartigen Sektionsbusses SB. Die Kommunikation wird dabei vom jeweiligen Masterknoten Ma1, Ma2,... gesteuert und kontrolliert. Diese können auch untereinander bidirektional Daten und Befehle austauschen, wofür als Kommunikationssystem ein eigener Masterbus MB vorgesehen ist. Dadurch ist es möglich, in den Sektionsnetzwerken erzeugte, virtuelle Leitachsen von einer Sektion auf eine oder mehrere andere Sektionen zu übertragen bzw. zu 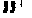 verteilen" und beispielsweise das Druckwerk DW2 der Druckeinheit DE5 in der Sektion S2 winkelsynchron zur Falzeinheit FE1 und/oder zum Druckwerk DW3 der Druckeinheit DE2 in der anderen Sektion S1 zu betreiben. Entsprechendes gilt für alle sonstigen Druckwerkseinheiten DW1-4, Falzeinheiten FE1, FE2,... und sonstigen Funktionsteile.

Schließlich ist noch ein Leitstandsbus LB gebildet, der die Masterknoten Ma2 über jeweilige Leitkommunikationsschnittstellen LKS mit einem Leitstand-Rechnersystem 6 verbindet. Von diesem können die Masterknoten Vorgaben und Parameter insbesondere zur Bildung einer virtuellen Leitachse jeweils für die zugeordnete Sektion 1, Sektion 2,... empfangen, um so die jeweilige Sektionsleitsteuerung SLS1, SLS2,... zu bilden. Durch deren Verknüpfung und/oder Kopplung über das Master-bussystem MB läßt sich mit der gezeichneten Maschine, beispielhaft eine Zeitungsdruckmaschine, eine Produktion und/oder ein Betrieb verwirklichen, bei dem sektionsübergreifend Arbeitsvorgänge flexibel einrichtbar sind.

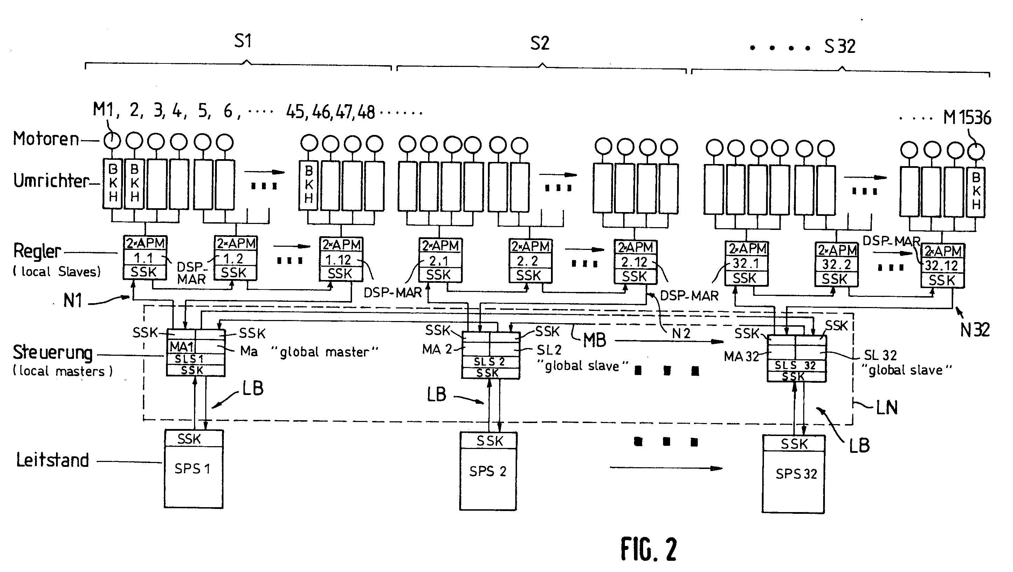

Gemäß Figur 2 können beispielsweise maximal 32 Sektionen S1, S2,...,S32 mit entsprechenden Sektionsleitachssteuerungen SLS1, SLS2,...,SLS32 über das Masterbussystem MB miteinander synchronisiert vernetzt werden. Dabei ist es heutzutage praktisch möglich, das jedes lokale Netzwerk N1, N2,...,N32 einer Sektionsleitachssteuerung bis zu 48 Antriebe synchronisiert steuert, wobei, wie oben bereits ausgeführt, alle im gesamten Antriebssystem mit verteilter virtueller Leitachse vorhandenen Antriebe M1-M1536 (48 x 32 = 1536) winkelsynchron zu jeder Sektionsleitachssteuerung SLS1, SLS2,...,SLS32 betrieben werden können. Nach gezeichnetem Beispiel gemäß Figur 2 enthält jedes der lokalen Netzwerke N1, N2,...,N32 einen Masterknoten bzw. Master-Signalverarbeitungsrechner Ma sowie 12 Slaveknoten bzw. Slave-Signalverarbeitungsrechner DSP-MAR, die jeweils zur Mehrachsregelung, im gezeichneten Beispiel zur Vierachsregelung, ausgebildet sind. Die Kommunikation innerhalb eines lokalen Netzwerkes erfolgt, wie nach Figur 1, mittels seriell-synchroner Schnittstellen SSK. Dieses serielle Bussystem ist nach Figur 2 auch zur Realisierung des Masterbusses MB verwendet, um die jeweiligen Masterknoten der lokalen bzw. Sektionssignalverarbeitungsnetzwerke N1, N2,...,N32 miteinander zu koppeln, zu synchronisieren oder sonst zu vernetzen. Folglich ist jeder Masterknoten Ma bzw. jede Sektionsleitachssteuerung SLS1, SLS2,...,SLS32 mit zwei seriell-synchronen Kommunikationsschnittstellen SSK versehen. Über die jeweils erste wird die Kommunikation im Sektionsnetzwerk N1, N2,...N32 dominiert, über die jeweils zweite wird die Kommunikation der Masterknoten untereinander zur Realisierung der verteilten virtuellen Leitachse abgewickelt. Dabei ist es zweckmäßig, von den ein Leitnetswerk LN bildenden Masterknoten einen als 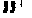 global master" und die verbleibenden als 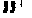 global slaves" arbeiten zu lassen, um die Übertragung von Synchronisationsinformationen betreffend virtueller Leitachsen realisieren zu können. Mithin ist also in einem der Masterknoten die Masterfunktion gleichsam zweimal - einmal für das Netzwerk N1, N2,...N32 der Sektionsleitsteuerung SL1, SL2,..SL32, einmal für das Leitnetzwerk LN der verbleibenden Masterknoten Ma2, Ma3,...,Ma32 - zu implementieren, während in den verbleibenden Masterknoten sowohl eine Masterfunktion Ma2, Ma3,...Ma32 als auch eine gleichzeitige Slavefunktion SL2, SL3,...,SL32 anzulegen sind.

Die zu einer virtuellen Leitachse einer Sektionsleitsteuerung SLS gekoppelten Antriebe können in weitere, beispielsweise 16 Gruppen unterteilt werden. Für diese Gruppen sind spezielle Funktionen verfügbar, wie die Farb- und Schnittregister, additive Geschwindigkeitssollwerte und Referenzierkomandos.

Gemäß Figur 2 ist jeder Sektionsleitachssteuerung SLS1, SLS2,...SLS32 auf einer übergeordneten Leitstandsebene eine speicherprogrammierbare Steuerung SPS1, SPS2,...,SPS32 zugeordnet, wobei die Kommunikation ebenfalls jeweils über seriellsynchrone Schnittstellen SSK stattfinden kann. Damit kann von einem Leitstand aus Einfluß auf die Generierung der virtuellen Leitachse in der jeweiligen Sektionsleitachssteuerung SLS1, SLS2,...,SLS32 Einfluß genommen werden. Diese Möglichkeit läßt sich speziell zur Kontrolle der Farb-, Schnittregister, einer Vor/Nacheilung von Druckwalzen oder einer Bahnspannungsregelung verwenden.

## Patentansprüche

1. Elektrisches Antriebssystem zur Verstellung von mehreren, insbesondere einer Vielzahl von Achsen oder sonstigen bewegbaren Funktionsteilen (DW1-4,3,5) eines Gerätes oder einer Maschine, insbesondere von Zylindern (3) oder Walzen von Druckmaschinen, in ihrer Lage, Geschwindigkeit oder Beschleunigung, mit mehreren elektromotorischen Antriebseinheiten (1), die jeweils mit wenigstens einem der Funktionsteile (DW1-4,3,FE1-FE2,5) verbunden sind, mit mehreren Signalverarbeitungsrechnern (Ma,DSP-MAR), die zur Aufnahme von Leit-, Steuer-, Soll- und/oder Lage-, Geschwindigkeits- und/oder Beschleunigungungssignalen von etwaigen Leitrechnern (6,SPS) oder Lagegebern an den Funktionsteilen (DW1-4,3,5) oder Läufern der Antriebseinheiten (1) ausgebildet und mit den Antriebseinheiten (1) zu deren steuerungs- oder regelungstechnischen Kontrolle verbunden sind, und mit mehreren, in sich geschlossenen Signalverarbeitungsnetzwerken (N1,N2,...,N32), die jeweils mehrere der Signalverarbeitungsrechner (Ma1-Ma32,DSP-MAR1.1-DSP-MAR32.12) als Knoten aufweisen und innerhalb des Geräts oder der Maschine einer Sektion beziehungsweise einem Verband von Funktionsteilen (DW1-4,3,FE1-FE2,5) zugeordnet sind, wobei innerhalb eines Netzwerks (N1) deren Knoten (Ma,DSP-MAR) nach dem Master/Slave-Prinzip angeordnet und durch Kommunikationskanäle und/oder ein Kommunikationssystem miteinander verbunden sind, und wenigstens ein Knoten eines Signalverarbeitungsnetzwerks (N1) mit einem Knoten eines anderen Signalverarbeitungsnetzwerks (N2,...,N32) gekoppelt ist, **dadurch gekennzeichnet, daß** die Signalverarbeitungsnetzwerke (N1 ,N2,...,N32) zur bidirektionalen Kommunikation und/oder Information untereinander jeweils über ihre Masterknoten (Ma1-Ma32) oder Master-Signalverarbeitungsrechner miteinander gekoppelt sind.

2. Antriebssystem nach Anspruch 1, gekennzeichnet durch eine Kopplung der Masterknoten (Ma1-Ma32) derart, daß sie ein eigenes, in sich geschlossenes globales Leitnetzwerk (LN) bilden.

3. Antriebssystem nach Anspruch 2, dadurch gekennzeichnet, daß die Rechnerknoten (Ma1-Ma32) des Leitnetzwerks (LN) in einer geschlossen ringartigen Struktur angeordnet sind.

4. Antriebssystem nach Anspruch 2 oder 3, dadurch gekennzeichnet, daß die Rechnerknoten (Ma1-Ma32) des Leitnetzwerks (LN) miteinander über ein serielles Bussystem (MB,SSK) in Kommunikation stehen.

5. Antriebssystem nach einem der Ansprüche 2 bis 4, dadurch gekennzeichnet, daß die Rechnerknoten (Ma1-Ma32) des Leitnetzwerks (LN) zueinander nach dem Master/Slave-Prinzip (Ma,S12-S132) angeordnet sind.

6. Antriebssystem nach einem der vorangehenden Ansprüche, dadurch gekennzeichnet, daß ein oder mehrere der innerhalb eines Signalverarbeitungsnetzwerks (N1,N2,...N32) als Slaveknoten angeordneten Signalverabeitungsrechner (DSP-MAR) oder Antriebsregler zur gleichzeitigen Regelung oder sonstigen Kontrolle mehrerer Antriebseinheiten (1) ausgebildet sind.

7. Antriebssystem nach einem der vorangehenden Ansprüche, dadurch gekennzeichnet, daß mindestens eines der Signalverarbeitungsnetzwerke (N1 ,N2,..,N3) mit einer Leitschnittstelle (LB,SSK) zu einem übergeordneten Leitsteuerungssystem, insbesondere zu dem Leitrechner (6), aufweist.

8. Antriebssystem nach Anspruch 7, dadurch gekennzeichnet, daß das Leitsteuerungssystem, insbesondere der Leitrechner (6), über die Leitschnittstelle (LB,SSK) direkt mit dem jeweiligen Masterknoten (Ma1-Ma32) oder einem oder mehreren der Slaveknoten (DSP-MAR) zu deren direkter Ansteuerung verbindbar ist.

9. Antriebssystem nach Anspruch 2 und gegebenenfalls einem der Ansprüche 3 bis 8, dadurch gekennzeichnet, daß eine oder mehrere Schnittstellen (Ma,SSK;S12-S132,SSK) der Master-Knoten (Ma1-Ma32), die der Kopplung der Masterknoten untereinander im Leitnetzwerk (LN) und der Kopplung mit den Slaveknoten (DSP-MAR) im jeweiligen lokalen Signalverarbeitungsnetzwerk (N1,N2,...,N32) dienen, mit Mitteln zur zeitlichen Koordination beziehungsweise Synchronisierung der gekoppelten Knoten versehen sind.

10. Antriebssystem nach Anspruch 9, dadurch gekennzeichnet, daß die Synchronisierungsmittel Übertragungs- oder Sende- und Empfangseinrichtungen für Synchronisationssignale oder -zeichen, insbesondere -telegramme, zwischen den Knoten und/oder Mittel zur Ableitung oder Rückgewinnung eines Synchrontaktes aus erhaltenen Synchronisationssignalen oder -zeichen aufweisen.

11. Antriebssystem nach Anspruch 10, dadurch gekennzeichnet, daß jeder Masterknoten (Ma1-Ma32) mit einer der Übertragungs- oder Sendeeinrichtung für Synchronisationssignale oder -zeichen, insbesondere -telegramme versehen ist.

12. Antriebssystem nach Anspruch 10 oder 11, dadurch gekennzeichnet, daß jeder Master- und/oder Slaveknoten (Ma1-Ma32,DSP-MAR) mit den Mitteln zur Ableitung oder Rückgewinnung eines Synchrontaktes aus erhaltenen Synchronisationssignalen oder -zeichen versehen ist.

13. Antriebssystem nach Anspruch 2 und gegebenenfalls einem der Ansprüche 3 bis 12, dadurch gekennzeichnet, daß im Leitnetzerk (LN) und/oder im jeweiligen Signalverarbeitungsnetzwerk (N1 ,N2,...,N32) der Masterknoten (Ma1) zur Kopplung mit einem anderen Masterknoten (Ma2,Ma3,...,Ma32) oder mit einem oder mehreren Slaveknoten (DSP-MAR) eine synchrone und/oder serielle Kommunikationsschnittstelle (SSK) aufweist.

14. Antriebssystem nach einem der vorangehenden Ansprüche, dadurch gekennzeichnet, daß der in einem Signalverarbeitungsnetzwerk (N1) als Kommunikationsmaster dominierende Masterknoten (Ma1) zur Kopplung und/oder Synchronisation mit wenigstens einem Masterknoten (Ma2,Ma2,...,Ma32) eines anderen Signalverarbeitungsnetzwerkes (N2,N3,...,N32) ausgebildet und eingesetzt ist.

15. Antriebssystem nach einem der vorangehenden Ansprüche, dadurch gekennzeichnet, daß die Masterknoten (Ma1,Ma2,...,Ma32) eines oder mehrerer oder aller Signalverarbeitungsnetzwerke (N1,N2,...,N32) in einer Ring- oder geschlossenen Schleifenstruktur (MB,SSK) verbunden sind und miteinander kommunizieren.

16. Arbeits- oder Betriebsverfahren für ein Antriebssystem nach einem der vorangehenden Ansprüche, dadurch gekennzeichnet, daß in einem oder mehreren oder in allen Signalverarbeitungsnetzwerken (N1,N2,...,N32) jeweils eine virtuelle Leitachse zur kinematischen Synchronisation der dem Signalverarbeitungsnetzwerk zugeordneten Funktionsteile (DW1-DW4,3,FE1-FE2,5) generiert wird.

17. Arbeits- oder Betriebsverfahren nach Anspruch 16, dadurch gekennzeichnet, daß die Synchronisationssignale entsprechend der virtuellen Leitachse eines Signalverarbeitungsnetzwerks (N1) aus diesem zu einem oder mehreren anderen Signalverarbeitungsnetzwerken (N2-N32) übertragen und zur Synchronisation dort angeschlossener Antriebseinheiten (1) verwendet werden.

18. Arbeits- oder Betriebsverfahren nach Anspruch 16 oder 17, dadurch gekennzeichnet, daß eine oder mehrere der Antriebseinheiten (1) eines oder mehrerer der Signalverarbeitungsnetzwerke (N1) über die Kopplung der Master-Signalverarbeitungsrechner oder Masterknoten (Ma1 ,Ma2,...,Ma32) nach einer virtuellen Leitachse eines anderen Signalverarbeitungsnetzwerkes (N2,N3,...,N32) betrieben werden.

19. Arbeits- oder Betriebsverfahren nach Anspruch 17 oder 18, dadurch gekennzeichnet, daß die nach einer gemeinsamen virtuellen Leitachse betriebenen Antriebseinheiten (1) in unterschiedliche Gruppen untergliedert und zur koordinierten Ausführung von je einer Gruppe zugeordneten Funktionen eingesetzt werden, die synchron zur virtuellen Leitachse ablaufen.

20. Arbeits- oder Betriebsverfahren nach einem der vorangehenden Ansprüche, für ein Antriebssystem nach Ansprüche 7 oder 8, dadurch gekennzeichnet, daß im Signalverarbeitungsnetzwerk (N1,N2,...,N32) die virtuelle Leitachse über die Leitschnittstelle (LB,SSK) aus Vorgaben des Leitsteuerungssystems, insbesondere Leitrechners (6), abgeleitet wird.
